(19) Europäisches Patentamt
European Patent Office
Office européen des brevets

(11) EP 2 244 036 A1

(12) **EUROPEAN PATENT APPLICATION**
published in accordance with Art. 153(4) EPC

(43) Date of publication:
**27.10.2010 Bulletin 2010/43**

(21) Application number: **09710098.6**

(22) Date of filing: **13.02.2009**

(51) Int Cl.:
***F25B 1/00*** *(2006.01)* ***F24F 11/02*** *(2006.01)*
***F25B 11/02*** *(2006.01)*

(86) International application number:
**PCT/JP2009/000578**

(87) International publication number:
**WO 2009/101818 (20.08.2009 Gazette 2009/34)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **15.02.2008 JP 2008034132**

(71) Applicant: **Panasonic Corporation**
**Kadoma-shi**
**Osaka 571-8501 (JP)**

(72) Inventor: **YUICHI, YAKUMARU**
**Chuo-ku, Osaka 540-6207 (JP)**

(74) Representative: **Ehlers, Jochen**
**Eisenführ, Speiser & Partner**
**Johannes-Brahms-Platz 1**
**20355 Hamburg (DE)**

# (54) REFRIGERATION CYCLE DEVICE

(57) A refrigeration cycle apparatus (100) includes: a first compressor (101); a second compressor (102) connected in parallel with the first compressor (101) in a refrigerant circuit (200); a radiator (103) for cooling a refrigerant compressed by the first and second compressors; an expander (104) coupled to a rotation shaft of the first compressor (101); an evaporator (105) for evaporating the refrigerant expanded by the expander (104); and a controller (115). The controller (115) includes an efficiency enhancing means for performing a first process including a step of changing a rotation speed of the first compressor (101), as a process for increasing a coefficient of performance (COP) of the refrigeration cycle apparatus (100), when a temperature of a heat carrier flowing into the radiator (103) is in a predetermined temperature range, and for performing a second process including a step of changing a rotation speed of the second compressor (102), as a process for increasing the coefficient of performance, when the temperature of the heat carrier flowing into the radiator (103) is not in the predetermined temperature range.

FIG.1

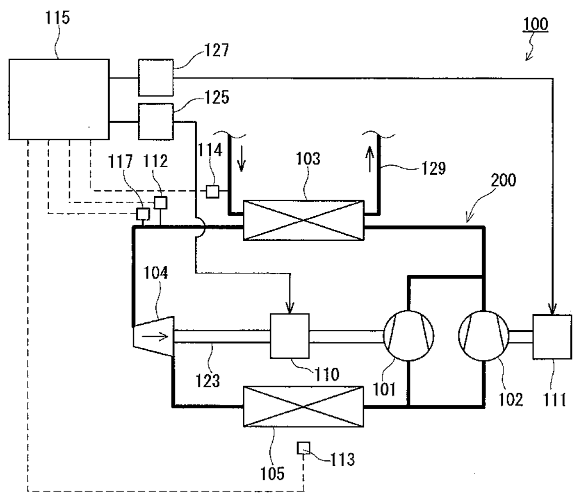


EP 2 244 036 A1

## Description

TECHNICAL FIELD

The present invention relates to a refrigeration cycle apparatus.

BACKGROUND ART

As described, for example, in JP 2001-116371 A, there has been known a refrigeration cycle apparatus in which an expander and a compressor are coupled together by a rotation shaft so that the power obtained by the expander is utilized for driving the compressor to improve the coefficient of performance (COP). This refrigeration cycle apparatus has a drawback of being less efficient under operating conditions other than the ideal conditions in design. This is because the expander and the compressor are coupled together by the rotation shaft and therefore the ratio between the displacement of the expander and that of the compressor cannot be changed.

There have been proposals to provide a bypass circuit for bypassing the expander and to provide a pre-expansion valve on the upstream side of the expander in order to obtain a high COP under any operating conditions. Specifically, when the displacement of the expander is insufficient, part of the cooled refrigerant is caused to flow through the bypass circuit to ensure the required circulation amount of the refrigerant. On the other hand, when the displacement of the expander is excessive, the refrigerant is decompressed through the pre-expansion valve to increase the specific volume of the refrigerant previously.

The use of the bypass circuit and the pre-expansion valve, however, reduces the power that can be recovered by the expander, which also reduces the COP enhancing effect. To solve this problem, JP 2004-212006 A proposes a refrigeration cycle apparatus as shown in FIG. 14. This refrigeration cycle apparatus includes a first compressor 21, an expander 23 coupled to the first compressor 21, and a second compressor 22 placed in parallel with the first compressor 21. When the high pressure of the cycle is higher than a target value, the total of the displacement of the first compressor 21 and that of the second compressor 22 is larger than the ideal value. Therefore, the rotation speed of the second compressor 22 is decreased to decrease the displacement thereof. Then, the amount of the refrigerant flowing through the expander 23 decreases, which brings the high pressure of the cycle closer to the target value. On the other hand, when the high pressure of the cycle is lower than the target value, the rotation speed of the second compressor 22 is increased. Such an adjustment of the rotation speed of the second compressor 22 leads to efficient operation.

DISCLOSURE OF THE INVENTION

It may be possible to adjust the rotation speed of the first compressor 21 and that of the second compressor 22 alternately to control the operation, but such a control may raise concerns about the stability of the system, and may require more complexity. In view of this, it makes sense to control the operation by adjusting the rotation speed of the second compressor 22 while fixing the rotation speed of the first compressor 21.

As a result of intensive studies, however, the present inventors have found out that there is another approach to the control for more efficient operation rather than the increase and decrease of only the rotation speed of the second compressor 22.

Specifically, the present invention provides a refrigeration cycle apparatus including:

a first compressor;
a second compressor connected in parallel with the first compressor in a refrigerant circuit;
a radiator for cooling a refrigerant compressed by the first and second compressors;
an expander coupled to a rotation shaft of the first compressor;
an evaporator for evaporating the refrigerant expanded by the expander; and
a controller including an efficiency enhancing means for performing a first process including a step of changing a rotation speed of the first compressor, as a process for increasing a coefficient of performance of the refrigeration cycle apparatus, when a temperature of a heat carrier to be heated in the radiator is in a predetermined temperature range, and for performing a second process including a step of changing a rotation speed of the second compressor, as a process for increasing the coefficient of performance, when the temperature of the heat carrier to be heated in the radiator is not in the predetermined temperature range.

According to the present invention, it is judged whether or not the temperature of the heat carrier to be heated in the radiator is in the predetermined temperature range, and based on this judgment, it is determined which process should be performed, the first process or the second process. When the temperature of the heat carrier is in the predetermined temperature range, the first process is performed. When the temperature of the heat carrier is not in the predetermined temperature range, the second process is performed. This technique makes the operation more efficient rather than mere increase and decrease of the rotation speed of the second compressor. The reasons for this effect will be described later in detail. In addition, this technique eliminates the need to adjust the rotation speed of the first compressor and that of the second compressor alternately, which facilitates the control of the respective compressors and also enhances the stability of the system.

BRIEF DESCRIPTION OF DRAWINGS

FIG. 1 is a block diagram showing a configuration of a refrigeration cycle apparatus according to a first embodiment of the present invention.

FIG. 2 is a graph showing a relationship between an incoming water temperature and a COP (at an outside air temperature of 2°C).
FIG. 3 is a graph showing a relationship between an incoming water temperature and a COP (at an outside air temperature of 16°C).
FIG. 4 is a correlation diagram between an outside air temperature and an optimum density ratio (at an incoming water temperature of 35°C).
FIG. 5 is a correlation diagram between an incoming water temperature and an optimum density ratio (at an incoming water temperature of 2°C).
FIG. 6 is a correlation diagram between a high pressure of a supercritical cycle and a COP.
FIG. 7 is a correlation diagram between a high pressure and rotation speeds of respective compressors in the refrigeration cycle apparatus of the first embodiment.
FIG. 8 is a correlation diagram between a high pressure and a rotation speed of a first compressor in a refrigeration cycle apparatus in which a second compressor is not provided.
FIG. 9 is a flow chart of a control according to the first embodiment.
FIG. 10A is a graph schematically showing a profile of a COP achieved by the control shown in the flow chart of FIG. 9.
FIG. 10B is a partially enlarged view of FIG. 10A.
FIG. 11 is a block diagram showing a configuration of a refrigeration cycle apparatus according to a second embodiment of the present invention.
FIG. 12 is a graph showing a relationship between an incoming water temperature and a COP (at an outside air temperature of 2°C).
FIG. 13 is a flow chart of a control according to the second embodiment.
FIG. 14 is a block diagram showing a configuration of a conventional refrigeration cycle apparatus.

BEST MODE FOR CARRYING OUT THE INVENTION

(First Embodiment)

As shown in FIG. 1, a refrigeration cycle apparatus 100 of the present embodiment includes a first compressor 101, a second compressor 102, a radiator 103, an expander 104, and an evaporator 105. These components are connected by pipes to form a refrigerant circuit 200. The first compressor 101 and the second compressor 102 respectively compress a refrigerant. The radiator 103 cools the refrigerant compressed by the first compressor 101 and the refrigerant compressed by the second compressor 102. The expander 104 expands the refrigerant cooled by the radiator 103. The evaporator 105 heats the refrigerant expanded by the expander 104. In the refrigerant circuit 200, the second compressor 102 is provided in parallel with the first compressor 101. The refrigerant circuit branches on the downstream side of the evaporator 105 so that the refrigerant is directed to the first compressor 101 and the second compressor 102 respectively. The branches of the refrigerant circuit 200 are merged with each other on the upstream side of the radiator 103 so that the total amount of the compressed refrigerant flows into the radiator 103. The refrigerant circuit 200 is filled with the refrigerant such as carbon dioxide and hydrofluorocarbon.
When the refrigeration cycle apparatus 100 is applied to a water heater, a water-type heat exchanger can be used for the radiator 103 and an air-type heat exchanger can be used for the evaporator 105. When the refrigeration cycle apparatus 100 is applied to an air conditioner, air-type heat exchangers can be used for both of the radiator 103 and the evaporator 105. The present embodiment shows an example in which the radiator 103 is a water-type heat exchanger. The radiator 103 has a water circuit 129 therein, and water (heat carrier) flowing through the water circuit 129 and the refrigerant flowing through the refrigerant circuit 200 exchange heat in the radiator 103.
The first compressor 101, the second compressor 102, and the expander 104 each are a positive displacement fluid machine of scroll type, rotary type, reciprocating type, or the like. The energy released from the refrigerant during its expansion is recovered by the expander 104 in the form of power. The first compressor 101 and the expander 104 are coupled together by a rotation shaft 123 so that the first compressor 101 can use the power recovered by the expander 104. A motor 110 for driving the rotation shaft 123 is disposed between the first compressor 101 and the expander 104. In the present embodiment, the rotation speed of the first compressor 101 always is equal to that of the expander 104 because they are coupled together by the rotation shaft 123. On the other hand, a dedicated motor 111 is connected to the second compressor 102. The rotation speed of the motor 110 can be controlled separately from that of the motor 111. In other words, the rotation speed of the first compressor 101 can be controlled independently from that of the second compressor 102. Thereby, the constraint of constant density ratio can be avoided.

The first compressor 101, the motor 110, the rotation shaft 123, and the expander 104 are accommodated in a common closed casing (not shown). This type of fluid machine is disclosed in WO 2006/035934, for example. Likewise, the second compressor 102 and the motor 111 also are accommodated in the common closed casing (not shown).

The refrigeration cycle apparatus 100 further includes a controller 115 as a means for controlling the operation, a first inverter 125 for supplying electric power to the motor 110, and a second inverter 127 for supplying electric power to the motor 111. Specifically, a DSP (Digital Signal Processor) including an A/D conversion circuit, an input/output circuit, an arithmetic and logic unit, a memory, etc. is used as the controller 115. The controller 115 controls the inverters 125 and 127 to adjust the rotation speeds of the motors 110 and 111, more specifically, the rotation speeds of the first compressor 101 and the second compressor 102.

The refrigerant circuit 200 is provided with a radiator-outlet temperature sensor 112 for detecting the temperature of the refrigerant at the outlet of the radiator 103, and a pressure sensor 117 for detecting the pressure of the refrigerant at the outlet of the radiator 103. An ambient temperature sensor 113 for detecting the ambient temperature (for example, the outside air temperature) of the evaporator 105 is provided in the vicinity of the evaporator 105. The water circuit 129 is provided with an incoming water temperature sensor 114 for detecting the temperature of water (heat carrier) to be heated in the radiator 103. Temperature detecting elements, such as a thermistor and a thermocouple, can be used for these temperature sensors. Examples of the pressure sensor 117 include sensors using semiconductor devices. Signals from each of these sensors are inputted to the controller 115.

The suction volume of the first compressor 101 may be different from that of the second compressor 102, but it is advantageous when they are equal. This is because the use of the same fluid machines for both the first compressor 101 and the second compressor 102 reduces the cost. The "suction volume" means the trapped volume at the time when the suction stroke is completed.

Next, the operation of the refrigeration cycle apparatus 100 will be described.

First, preliminary experiments are described. The preliminary experiments were carried out to examine how the COP of the refrigeration cycle apparatus 100 changed when the refrigeration cycle apparatus 100 was applied to a hot water-type heater. In these preliminary experiments, the following controls were attempted: (i) a control for adjusting the rotation speed of the first compressor 101 to obtain the optimum high pressure while fixing the rotation speed of the second compressor 102 at a predetermined value; and (ii) a control for adjusting the rotation speed of the second compressor 102 to obtain the optimum density ratio while fixing the rotation speed of the first compressor 101 at a predetermined value. The "optimum high pressure" means the high pressure of the refrigeration cycle at which the COP is expected to be maximum in terms of the physical properties of the refrigerant. The "high pressure of the refrigeration cycle" means the pressure of the refrigerant discharged from the first compressor 101 and the second compressor 102 and directed to the expander 104 by way of the radiator 103. The "optimum density ratio" means the ratio Q (Q = ρe/ρc) between the density ρe of the refrigerant at the inlet of the first compressor 101 and the density ρc of the refrigerant at the inlet of the expander 104. The preliminary experiments were carried out under the following conditions. FIG. 2 and FIG. 3 show the results of the experiments. In each of FIG. 2 and FIG. 3, the vertical axis indicates the COP of the refrigeration cycle apparatus 100, and the horizontal axis indicates the temperature detected by the incoming water temperature sensor 114, respectively.

Suction volume of the first compressor: 4 cc
Suction volume of the second compressor: 4 cc
Suction volume of the expander: 0.8 cc
Fixed rotation speed of the first compressor: 60 Hz
Fixed rotation speed of the second compressor: 60 Hz
Refrigerant: carbon dioxide
Outside air temperature: 2°C or 16°C

In the graphs of FIG. 2 and FIG. 3, monotonically decreasing curves of the COP show the results when the rotation speed of the second compressor 102 was adjusted to obtain the optimum density ratio while the rotation speed of the first compressor 101 was fixed at 60 Hz. The lower the incoming water temperature is, the higher the rotation speed of the second compressor 102 is. The higher the incoming water temperature is, the lower the rotation speed of the second compressor 102 is. However, the incoming water temperature is not proportional to the rotation speed of the second compressor 102.

In the graphs of FIG. 2 and FIG. 3, curves having extreme values show the results when the rotation speed of the first compressor 101 was adjusted to obtain the optimum high pressure while the rotation speed of the second compressor 102 was fixed at 60 Hz. The lower the incoming water temperature is, the higher the rotation speed of the first compressor 101 is. The higher the incoming water temperature is, the lower the rotation speed of the first compressor 102 is. However, the incoming water temperature is not proportional to the rotation speed of the first compressor 101. The COP was calculated based on the power consumed by the motor, the heated water temperature, the incoming water temperature, and the amount of hot water supplied.

The results shown in FIG. 2 and FIG. 3 further are reviewed.

Generally, the heat exchange efficiency in the radiator 103 increases as the incoming water temperature decreases. Therefore, it can be predicted that the COP tends to increase or decrease monotonically with respect to the incoming water temperature. Such a tendency can be seen in the control (ii) for adjusting the rotation speed of the second compressor 102 to obtain the optimum density ratio while fixing the rotation speed of the first compressor 101 at a predetermined value. However, in the control (i) for adjusting the rotation speed of the first compressor 101 to obtain the optimum high pressure while fixing the rotation speed of the second compressor 102 at a predetermined value, the COP does not increase or decrease monotonically and reaches a peak at a specific incoming water temperature. The reasons why these results were obtained are not obvious, but the coupling of the first compressor 101 and the expander 104 by the rotation axis 123 and the physical properties of carbon dioxide as a supercritical refrigerant seem to affect these results.

To enhance the COP of a refrigeration cycle apparatus using, as a working fluid, a supercritical refrigerant such as carbon dioxide, and including a compressor and an expander coupled to the compressor by a rotation axis, attention needs to be paid to the following two points. One is to adjust the density ratio Q to the optimum density ratio, and the other is to adjust the high pressure of the refrigeration cycle to the optimum high pressure.

If the optimum high pressure is obtained automatically when the actual density ratio Q coincides with the optimum density ratio, the best COP should be obtained only by performing the above-mentioned control (i) or (ii). Reality, however, is different. As is clear from FIG. 2 and FIG. 3, the control method for maximizing the COP of the refrigeration cycle apparatus 100 changes depending on the operating conditions. The optimum density ratio does not always produce the optimum high pressure.

As shown in FIG. 2, for example, when the outside air temperature is 2°C, if the incoming water temperature is in the range of 35 to 45°C, a high COP is obtained by performing the above-mentioned control (i), and if the incoming water temperature is outside that range, a high COP is obtained by performing the above-mentioned control (ii). As shown in FIG. 3, when the outside air temperature is 16°C, if the incoming water temperature is in the range of 40 to 47°C, a high COP is obtained by performing the control (i), and if the incoming water temperature is outside that range, a high COP is obtained by performing the control (ii).

For example, a room heater using the refrigeration cycle apparatus 100 has a heating circuit (corresponding to the water circuit 129 shown in FIG. 1) in which hot water circulates. Therefore, the temperature of the water to be heated in the radiator 103 generally is about 30 to 50°C. Accordingly, it is desirable for the efficient operation of the refrigeration cycle apparatus 100 to switch the control method according to the operating conditions such as the incoming water temperature and the outside air temperature.

The incoming water temperatures T1 and T2, at which the control method should be switched, also depend on the fixed rotation speeds of the first compressor 101 and the second compressor 102. That is, when the fixed rotation speeds change, the COP profiles also change from the profiles shown in FIG. 2 and FIG. 3. For example, in the case where the extent to which the capacity of the refrigeration cycle apparatus 100 can be controlled is of no importance, it is possible to use the rated rotation speed of the first compressor 101 as the fixed rotation speed of the first compressor 101 in the control (ii) and to use the rated rotation speed of the second compressor 102 as the fixed rotation speed of the second compressor 102 in the control (i). On the other hand, in the case where the incoming water temperatures T1 and T2, at which the control method should be switched, are determined corresponding to the outside air temperature and the fixed rotation speeds, the capacity of the refrigeration cycle apparatus 100 can be controlled to the greater extent.

Next, the density ratio Q and the optimum density ratio are described in detail.

A relationship represented by the following equation (1) is established:

$$Vc * Hz1 : Ve * Hz1 = Mc * (Hz1/(Hz1 + Hz2)) * G : Me * G \ldots (1)$$

where Vc denotes the suction volume of the first compressor 101, Ve denotes the suction volume of the expander 104, Hz1 denotes the rotation speed of the first compressor 101, Hz2 denotes the rotation speed of the second compressor 102, Mc denotes the specific volume of the refrigerant at the inlet of the first compressor 101, Me denotes the specific volume of the refrigerant at the inlet of the expander 104, and G denotes the circulation amount by weight of the refrigerant in the refrigeration cycle apparatus 100.

When the equation (1) is expanded using the density ρc of the refrigerant at the inlet of the first compressor 101 and the density ρe of the refrigerant at the inlet of the expander 104, the following equation (2) is obtained:

$$\rho e/\rho c = (Vc/Ve) * ((Hz1 + Hz2)/Hz1) \ldots (2)$$

Vc/Ve in the right side of this equation is a design value, which is difficult to be changed arbitrarily. Therefore, in order to obtain a desired density ration Q (Q = ρe/ρc), the rotation speed Hz1 of the first compressor 101 and/or the rotation speed Hz2 of the second compressor 102 need to be adjusted. Here, as shown in FIG. 4, the optimum density ratio increases as the outside air temperature decreases. As shown in FIG. 5, the optimum density ratio increases as the incoming water temperature decreases. In addition, the optimum density ratio is affected by various other factors such as the temperature of the refrigerant drawn into the compressor, the specifications of the refrigeration cycle apparatus, and the amount of the refrigerant filled.

For example, assume that the outside air temperature is 7°C (winter condition), and the target value of the density ratio Q (the optimum density ratio) is 10. When the suction volume Vc of the first compressor 101 is 4 cc, the rotation speed Hz1 of the first compressor 101 is 60 Hz, and the suction volume Ve of the expander 104 is 0.8 cc, the rotation speed Hz2 of the second compressor 102 is 60 Hz. When the outside air temperature is 25°C (summer condition) and the target value of the density ratio Q is 8, the rotation speed Hz2 of the second compressor 102 is 36 Hz.

In the present embodiment, the second compressor 102 is controlled to obtain the optimum density ratio. When the rotation speed of the second compressor 102 is changed while the rotation speed of the first compressor 101 is fixed at a predetermined value, only the flow rate by volume of the compressed refrigerant can be increased or decreased while the flow rate by volume in the expander 104 is maintained constant. This is advantageous because the adjustment range of the density ratio is expanded. This advantage is of particular significance in the places where the day/night difference or seasonal difference in the temperature is large because the difference in the optimum density ratio also is large in such places. Furthermore, in the present embodiment, the rotation speed of the first compressor 101 is adjusted to obtain the optimum high pressure. When the rotation speed of the first compressor 101 changes, the rotational speed of the expander 104 also changes. Therefore, the use of the first compressor 101 makes it easy to adjust the high pressure of the refrigeration cycle finely.

Next, the high pressure and the optimum high pressure of the refrigeration cycle are described in detail.

The refrigeration cycle using carbon dioxide as a refrigerant forms a supercritical cycle in which the refrigerant is brought into a supercritical state on the high pressure side (a path from the compressor to the expander through the radiator). Therefore, as shown in FIG. 6, the COP has a peak with respect to the high pressure. The optimum high pressure corresponding to the peak varies depending on the temperature of the refrigerant at the outlet of the radiator 103, the outside air temperature, etc. FIG. 6 shows an example in which the degree of superheat is 5°C and the incoming water temperature is 35°C.

The optimum high pressure can be calculated based on the state of the refrigeration cycle. Specifically, the optimum high pressure can be calculated based on the detection results of the radiator outlet temperature sensor 112 and the ambient temperature sensor 113. The most effective means for changing the high pressure is to change the rotation speed of the compressor. The high pressure can be adjusted arbitrarily by changing the rotation speed of the first compressor 101.

Confirmatory experiments were carried out to examine the relationships between the rotation speeds of the respective compressors and the high pressures at different seasons of the year. FIG. 7 shows the results of the experiments. For example, under the intermediate condition, the rotation speed of the first compressor 101 was adjusted so that the actual high pressure (data represented by a black rhomb in FIG. 7) coincided with the optimum high pressure (data represented by a cross), and the rotation speed of the second compressor 102 was adjusted to obtain the required heating capacity. As a result of the proper control of the first compressor 101 and the second compressor 102, the actual high pressures were allowed to coincide with the optimum high pressures throughout the year including winter, intermediate, and summer seasons.

Furthermore, for the refrigeration cycle apparatus in which the second compressor is not provided, the relationship between the rotation speed of the first compressor and the high pressure was examined at different seasons of the year. FIG. 8 shows the results. The actual high pressure coincided well with the optimum high pressure under the winter condition, but under the intermediate and summer conditions, the actual high pressure had significantly different values from the optimum high pressure. This is because the first compressor and the expander are designed to meet the winter condition. In the case where the second compressor is not provided, the density ratio Q always is constant (constraint of constant density ratio), regardless of the rotation speed. Therefore, the high pressure is left to take its course. A high COP is obtained only in the winter season, but the COP is poor throughout the year.

Next, the control procedure for the respective compressors is described with reference to the flow chart of FIG.

9. An example in which the refrigeration cycle apparatus 100 is applied to a water heater (including a room heater) is described.

The controller 115 performs the control procedure shown in FIG. 9 at regular intervals. First, in Step 201, the controller 115 judges whether or not it has received a starting trigger to start up the refrigeration cycle apparatus 100. The "starting triggers" include a trigger to notify the controller 115 that the operation should be started, and a trigger to notify the controller 115 that the required capacity of the refrigeration cycle apparatus 100 has been changed. The former trigger occurs, for example, when a user turns the tap on to use hot water, when the room heater is turned on, when the amount of hot water stored in a tank decreases to below a predetermined amount, when the hot water storage operation is performed automatically at midnight, etc. The latter trigger occurs, for example, when a user changes the preset temperature for room heating, when the degree of heating from "low" to "high, etc. The "required capacity" means the capacity that the refrigeration cycle apparatus 100 should provide.

When the refrigeration cycle apparatus 100 is not in operation, or when its required capacity is changed even during its operation, the initializing process of Steps 202 to 204 is performed. On the other hand, when the refrigeration cycle apparatus 100 has already been in operation and its required capacity is not changed, Steps 202 to 204 are omitted and the processes of Step 205 and the following steps are performed.

In Step 202, first, the required capacity is calculated based on the user's instruction or the like that is the information included in the starting trigger. In the case where the refrigeration cycle apparatus 100 is applied to a bath water heater, the "user's instruction" is, for example, a "reheating operation", a "hot water adding operation", or the like, selected by the user using a remote control. For the "reheating operation", the required capacity is set (for example, at 5 kW) so that hot water of 50°C is supplied, and for the "hot water adding operation", the required capacity is set (for example, at 4 kW) so that hot water of 40°C is supplied. In the case where the refrigeration cycle apparatus 100 is applied to a room heater, the required capacity is set, for example, according to the room temperature set by the user. In some cases, the controller 115 sets the required capacity automatically based on parameters such as an outside air temperature, a required amount of hot water, and an incoming water temperature.

Next, in Step 203, the rotation speeds of the first compressor 101 and the second compressor 102 are respectively determined so that the required capacity can be provided. Specifically, the initial rotation speeds of the first compressor 101 and the second compressor 102 are determined previously corresponding to the required capacity. The initial rotation speed of the first compressor 101 may be equal to that of the second compressor 102, or they may be different from each other. The initial rotation speeds may be determined based not only on the required capacity but also on the detection results of the ambient temperature sensor 113 and the incoming water temperature sensor 114. Instructions are given to the inverters 125 and 127 so that the first compressor 101 and the second compressor 102 operate at the determined initial rotation speeds.

Next, in Step 204, the incoming water temperature is detected to set the control mode for the current operation of the refrigeration cycle apparatus 100. As shown in FIG. 10A, when the incoming water temperature is lower than T1 or higher than T2, the "density ratio control mode" for performing the control (ii) described above is set and stored in the memory. On the other hand, when the incoming water temperature is in the range of T1 to T2, the "high pressure control mode" for performing the control (i) described above is set and stored in the memory.

Next, in Step 205, in order to recognize the operational state of the refrigeration cycle apparatus 100, signals are obtained from the radiator outlet temperature sensor 112, the ambient temperature sensor 113, and the incoming water temperature sensor 114, so that the respective temperatures are detected.

Next, in Step 206, it is judged whether or not the detected incoming water temperature is in the predetermined temperature range of T1 to T2. The "predetermined temperature range" is a temperature range determined corresponding to the ambient temperature of the evaporator 105. As described with reference to FIG. 2 and FIG. 3, for example, when the outside temperature is 2°C, the "predetermined temperature range" is 35 to 45°C, and when the outside temperature is 16°C, the "predetermined temperature range" is 40 to 47°C.

In the case where the fixed rotation speeds of the respective compressors are not constant, the "predetermined temperature range" also is a temperature range determined corresponding to the fixed rotation speed of the second compressor 102 when the first process is performed in the high pressure control mode and the fixed rotation speed of the first compressor 101 when the second process is performed in the density ratio control mode. As described later, the "first process" is a process including a step of changing the rotation speed of the first compressor 101. Likewise, the "second process" is a process including a step of changing the rotation speed of the second compressor 102.

When the incoming water temperature is in the range of T1 to T2, the COP of the refrigeration cycle apparatus can be maximized by adjusting the high pressure of the refrigeration cycle to coincide with the optimum high pressure Pm. Therefore, the process proceeds to Step 207, in which it is judged first whether or not the control mode needs to be switched. When the control mode needs to be switched, the rotation speeds of the respective compressors are adjusted in Step 208.

As shown in FIG. 10A, when the incoming water temperature increases gradually and exceeds T1, the control mode is switched from the density ratio control mode to the high pressure control mode. That is, as shown in FIG. 10B, the COP profile traces the line from Point $P_1$ to Point $P_2$. For example, assume that the rotation speed (fixed rotation speed) of the first compressor 101 and the rotation speed of the second compressor 102 are 60 Hz and 45 Hz, respectively, at Point $P_1$. Furthermore, assume that the rotation speed of the first compressor 101 and the rotation speed (fixed rotation speed) of the second compressor 102 are 48 Hz and 60 Hz, respectively, at Point $P_2$. Since the compressor to be operated at a fixed rotation speed is changed from the first compressor 101 to the second compressor 102, the rotation speeds of the respective compressors are adjusted in the course of change from Point $P_1$ to Point $P_2$. The compressor to be operated at a fixed rotation speed can, of course, be changed from the second compressor 102 to the first compressor 101. Sudden changes in the rotation speeds of the respective compressors may possibly lead to an unstable cycle. Therefore, it is preferable that the rotation speeds of the respective compressors be changed in Step 208 as slowly as possible.

Next, in Step 209, the optimum high pressure (target high pressure) Pm, at which the COP can be maximized, is calculated. As is well known, the optimum high pressure Pm is related closely to the incoming water temperature and the radiator outlet temperature. If the correlation equation (or the correlation table) between the incoming water temperatures and the corresponding optimum high pressures Pm is inputted previously to the controller 115, the optimum high pressure Pm can be obtained based on the detected incoming water temperature. Likewise, the optimum high pressure Pm can be obtained by using the radiator outlet temperature instead of the incoming water temperature.

Next, in Step 210, the actual high pressure Pd is detected by the pressure sensor 117. The detected high pressure Pd is compared with the optimum high pressure Pm to determine which is higher. If Pd is lower than Pm, the process proceeds to Step 211, in which the rotation speed of the first compressor 101 is increased. If Pd is equal to or higher than Pm, the process proceeds to Step 212, in which the rotation speed of the first compressor 101 is decreased. The actual high pressure Pd also can be obtained (estimated) without using the pressure sensor 117. As is well known, the high pressure of the refrigeration cycle is related closely to parameters such as the rotation speeds of the compressors and the outside air temperature. Therefore, a correlation table, in which the high pressures are described corresponding to such parameters, may be used to obtain the actual high pressure Pd.

A correlation table, in which the rotation speeds of the first compressor 101 required to obtain the optimum high pressure Pm are described corresponding to the incoming water temperatures, may be inputted previously to the controller 115. With reference to this correlation table, the rotation speed of the first compressor 101 can be determined uniquely according to the incoming water temperature.

On the other hand, when the incoming water temperature is not in the range of T1 to T2, the COP of the refrigeration cycle apparatus can be maximized by adjusting the density ratio Q to coincide with the optimum density ratio Qm. The process proceeds to Step 213, in which it is judged first whether or not the control mode needs to be switched. When the control mode needs to be switched, the rotation speeds of the respective compressors are adjusted in Step 214. The process in Steps 213 and 214 is the same as the process in Steps 207 and 208 described above.

Next, in Step 215, the optimum density ratio Qm (target density ratio), at which the COP can be maximized, is calculated. As described with reference to FIG. 4 and FIG. 5, the optimum density ratio Qm is related closely to the incoming water temperature and the outside air temperature. If the correlation equation (or the correlation table) between the incoming water temperatures and the corresponding optimum density ratios Qm is inputted previously to the controller 115, the optimum density ratio Qm can be obtained based on the detected incoming water temperature. Likewise, the optimum density ratio Qm can be obtained by using the outside air temperature instead of the incoming water temperature.

In Step 216, the actual density ratio Q and the optimum density ratio Qm are compared with each other to determine which is higher. If Q is lower than Qm, the process proceeds to Step 217, in which the rotation speed of the second compressor 102 is increased. If Q is equal to or higher than Qm, the process proceeds to Step 218, in which the rotation speed of the second compressor 102 is decreased. The actual density ratio Q can be calculated according to the above-mentioned equation (2).

After the processes in Steps 206 to 218 are performed, the process for correcting the rotation speed of the first compressor 101 or the rotation speed of the second compressor 102 may be performed. Specifically, it is judged whether or not the rotation speeds of the respective compressors are necessary and sufficient to provide the required capacity, because the rotation speed of the first compressor 101 or the second compressor 102 has changed. If the capacity is insufficient, the rotation speeds of the respective compressors are increased by multiplying the rotation speeds thereof by correction coefficients enough to compensate for the shortfall in the capacity. Likewise, if the capacity is excessively high, the rotation speeds of the respective compressors are decreased by multiplying the rotation speeds thereof by correction coefficients enough to reduce the excess of the capacity. In other words, the controller 115 further includes a means for correcting the current rotation speed of the first compressor 101 and/or the current rotation speed of the second compressor 102, after the first process (Steps 209 to 212) and the second process (Steps 215 to 218) are performed, so that the refrigeration cycle apparatus 100 can provide the required capacity. This correction allows the refrigeration cycle apparatus 100 to operate with its necessary and sufficient capacity while maintaining the COP at a high level. Since the correction changes the fixed rotation speeds, the temperature range of T1 to T2 also changes.

As described above, the controller 115 includes an efficiency enhancing means for performing the first process, as a process for increasing the COP of the refrigeration cycle apparatus 100, when the incoming water temperature is in the predetermined temperature range of T1 to T2, and for performing the second process, as a process for increasing the COP, when the incoming water temperature is not in the predetermined temperature range of T1 to T2. The "first process" (Steps 209 to 212) is a process including a step of changing the rotation speed of the first compressor 101. The "second process" (Steps 215 to 218) is a process including a step of changing the rotation speed of the second compressor 102. This switching between the two control methods (control modes) according to the operational state of the refrigeration cycle apparatus 100 allows the COP to be maintained at a high level under all the operating conditions.

Steps 211 and 212 in the first process are steps of changing the rotation speed of the first compressor 101 so that the pressure Pd of the refrigerant on the high pressure side of the refrigeration cycle approaches the optimum high pressure Pm at which the COP can be maximized (optimum high pressure control). Steps 217 and 218 in the second process are steps of changing the rotation speed of the second compressor 102 so that the density ratio Q between the density ρe of the refrigerant at the inlet of the expander 104 and the density ρc of the refrigerant at the inlet of the first compressor 101 (or the second compressor 102) approaches the optimum density ratio Qm at which the COP can be maximized (optimum density ratio control).

Specifically, in the first process, the high pressure Pd and the optimum high pressure Pm are compared to judge whether or not the current high pressure Pd needs to be changed. The rotation speed of the first compressor 101 is increased when the high pressure Pd is excessively low, and the rotation speed of the first compressor 101 is decreased when the high pressure Pd is excessively high. In the second process, the density ratio Q and the optimum density ratio Qm are compared to judge whether or not the current density ratio Q needs to be changed. The rotation speed of the second compressor 102 is increased when the density ratio Q is excessively small, and the rotation speed of the second compressor 102 is decreased when the density ratio Q is excessively large. The switching between the first process and the second process is performed appropriately, the COP can be maintained at a high level under all the operating conditions.

In the present embodiment, the controller 115 further includes an initializing means for setting initial rotation speeds of the first compressor 101 and the second compressor 102 so that the refrigeration cycle apparatus 100 can provide a required capacity, on the condition that the controller 115 receives a starting trigger to start up the refrigeration cycle apparatus 100. After the refrigeration cycle apparatus 100 is started up, if the incoming water temperature is in the predetermined temperature range of T1 to T2, the first process (Steps 209 to 212) is performed based on the high pressure Pd in the initial operation state in which the first compressor 101 and the second compressor 102 respectively are operating at the initial rotation speeds. If the incoming water temperature is not in the predetermined temperature range of T1 to T2, the second process (Steps 215 to 218) is performed based on the density ratio Q in this initial operation state. This allows a smooth starting of the refrigeration cycle apparatus 100.

As shown in FIG. 10A, as a result of switching between the density ratio control mode and the high pressure control mode at the temperatures T1 and T2, the COP decreases monotonically with an increase in the incoming water temperature in the range of incoming water temperatures lower than the temperature T1 and in the range higher than the temperature T2. In the temperature range of T1 to T2, the COP increases and decreases with an increase in the incoming water temperature to show one extreme value.

In the present embodiment, in Step 210, the high pressure Pd and the optimum high pressure Pm are compared with each other to determine which is higher. The optimum high pressure Pm may have a certain range of values. Specifically, the rotation speed of the first compressor 101 is decreased when the high pressure Pd exceeds the optimum high pressure Pm + $\alpha$, and the rotation speed of the first compressor 101 is increased when the high pressure Pd falls below the optimum high pressure Pm - $\alpha$. Likewise, the optimum density ratio Qm may have a certain range of values. Specifically, the rotation speed of the second compressor 102 is decreased when the density ratio Q exceeds the optimum density ratio Qm + $\alpha$, and the rotation speed of the second compressor 102 is increased when the density ratio Q falls below the optimum density ratio Qm - $\alpha$. These dead zones eliminate the need to change the rotation speeds frequently even if the high pressure Pd fluctuates slightly. The similar dead zones may be provided in the temperatures T1 and T2.

(Second Embodiment)

As shown in FIG. 11, a refrigeration cycle apparatus 300 of the present embodiment differs from the first embodiment in that the former further includes an injection circuit 132 having a flow control valve 134. The injection circuit 132 connects the outlet of the radiator 103 to the intermediate pressure portion of the expander 104 through the flow control valve 134. A valve controller 136 for adjusting the opening of the flow control valve 134 is connected to the controller 115. The flow rate of the refrigerant flowing through the injection circuit 132 varies depending on the opening of the flow control valve 134. The "intermediate pressure portion" is provided to mix a refrigerant in the process of expansion with a high-pressure refrigerant. Typically, the intermediate pressure portion is an opening portion facing the expansion chamber.

As described in the first embodiment, when the outside air temperature is 25°C (summer condition), the optimum density ratio Qm is 8, and the rotation speed Hz2 of the second compressor 102 is 36 Hz. It is not preferable, however, from the viewpoint of reliability to operate the second compressor 102 at a low rotation speed. It is desirable to operate the second compressor 102 at a rotation speed (for example 60 Hz) at which the efficiency of the motor is maximized. According to the present embodiment, in which the excess refrigerant is caused to flow through the injection circuit 132 while the second compressor 102 is being operated at about the rated rotation speed, the COP can be maintained at a high level.

As in the first embodiment, the control method (control mode) for maximizing the COP of the refrigeration cycle apparatus 300 is switched according to the operating conditions. As shown in FIG. 12, according to the refrigeration cycle apparatus 300 of the present embodiment, for example, when the outside air temperature is 2C, if the incoming water temperature is in the range of 36 to 43°C, the control (i) described in the first embodiment is performed to obtain a higher COP. If the incoming water temperature is outside this range, the control (ii) is performed to obtain a higher COP. This suggests that the temperature range at which the control method should be switched to obtain a higher COP depends not only on the radiator outlet temperature and the outside air temperature but also on the configuration of the refrigeration cycle apparatus.

FIG. 13 is a flow chart of the control procedure performed in the present embodiment. Steps 301 to 316 are the same as Steps 201 to 216 described in the first embodiment. In Step 316, the current density ratio Q and the optimum density ratio Qm are compared with each other, and if Q is lower than Qm, the process proceeds to Step 317, in which the rotation speed of the second compressor 102 is increased. If Q is equal to or higher than Qm, the process proceeds to Step 318, in which the rotation speed of the second compressor 102 is decreased and the opening of the flow control valve 134 is increased. Even when the actual density ratio Q cannot coincide with the optimum density ratio Qm simply by adjusting the rotation speed of the second compressor 102, the flow control valve 134 provided in the injection circuit 132 serves to increase the COP of the refrigeration cycle apparatus 300.

(Modification)

At the refrigerant-side outlet of the radiator 103, there is a close relationship between the temperature of the refrigerant and the temperature of water. For example, in a water heater, the following relationship is established:

(refrigerant temperature at radiator outlet) ≒ (incoming water temperature + 5°C).

Therefore, the temperature of the water to be heated in the radiator 103 (incoming water temperature) may be detected indirectly based on the detection result of the radiator outlet temperature sensor 112. In this case, since the incoming water temperature sensor 114 can be omitted, which contributes to cost reduction. It also is conceivable to detect the incoming water temperature indirectly based on the outside air temperature. Specifically, the temperature of the refrigerant at the outlet of the radiator 103 or the outside air temperature may be used instead of the incoming water temperature to perform a series of controls. In the case where the radiator 103 is a heat exchanger other than a water-type heat exchanger (for example, an air-type heat exchanger), the temperature of a heat carrier, such as air, to be heated in the radiator 103 can be used instead of the incoming water temperature.

INDUSTRIAL APPLICABILITY

The present invention can be applied to a refrigeration cycle apparatus for various uses, such as a water heater, a room heater, a bathroom dryer, and an air conditioner.

## Claims

**1.** A refrigeration cycle apparatus comprising:

a first compressor;
a second compressor connected in parallel with the first compressor in a refrigerant circuit;
a radiator for cooling a refrigerant compressed by the first and second compressors;
an expander coupled to a rotation shaft of the first compressor;
an evaporator for evaporating the refrigerant expanded by the expander;
and
a controller including an efficiency enhancing means for performing a first process including a step of changing a rotation speed of the first compressor, as a process for increasing a coefficient of performance of the refrigeration cycle apparatus, when a temperature of a heat carrier to be heated in the radiator is in a predetermined temperature range, and for performing a second process including a step of changing a rotation speed of the second compressor, as a process for increasing the coefficient of performance, when the temperature of the heat carrier to be heated in the radiator is not in the predetermined temperature range.

**2.** The refrigeration cycle apparatus according to claim 1, wherein the predetermined temperature range is a temperature range that is determined corresponding to an ambient temperature of the evaporator.

**3.** The refrigeration cycle apparatus according to claim 2, wherein the predetermined temperature range further is a temperature range that is determined corresponding to the rotation speed of the second compressor in the first process and to the rotation speed of the first compressor in the second process.

**4.** The refrigeration cycle apparatus according to claim 1, wherein
the step of changing the rotation speed of the first compressor is a step of changing the rotation speed of the first compressor so that a pressure Pd of the refrigerant on a high pressure side of a refrigeration cycle approaches an optimum high pressure Pm at which the coefficient of performance can be maximized, and
the step of changing the rotation speed of the second compressor is a step of changing the rotation speed of the second compressor so that a density ratio Q between a density pe of the refrigerant at an inlet of the expander and a density pc of the refrigerant at an inlet of the compressor approaches an optimum density ratio Qm at which the coefficient of performance can be maximized.

**5.** The refrigeration cycle apparatus according to claim 4, wherein
in the first process, the efficiency enhancing means compares the pressure Pd and the optimum high pressure Pm to judge whether or not the current pressure Pd needs to be changed, and increases the rotation speed of the first compressor when the pressure Pd is excessively low and decreases the rotation speed of the first compressor when the pressure Pd is excessively high, and
in the second process, the efficiency enhancing means compares the density ratio Q and the optimum density ratio Qm to judge whether or not the current density ratio Q needs to be changed, and increases the rotation speed of the second compressor when the density ratio Q is excessively small and decreases the rotation speed of the second compressor when the density ratio Q is excessively large.

**6.** The refrigeration cycle apparatus according to claim 5, wherein the controller further includes an initializing means for setting initial rotation speeds of the first compressor and the second compressor so that the refrigeration cycle apparatus can provide a required capacity, on the condition that the controller receives a starting trigger to start up the refrigeration cycle apparatus.

**7.** The refrigeration cycle apparatus according to claim 1, further comprising a radiator outlet temperature sensor for detecting a temperature of the refrigerant at an outlet of the radiator,
wherein the temperature of the heat carrier to be heated in the radiator is detected indirectly based on the temperature detected by the radiator outlet temperature sensor.

**8.** The refrigeration cycle apparatus according to claim 1, further comprising an injection circuit including a flow control valve, the injection circuit connecting an outlet of the radiator to an intermediate pressure portion of the expander through the flow control valve,
wherein the second process further includes a step of changing an opening of the flow control valve.

FIG.1

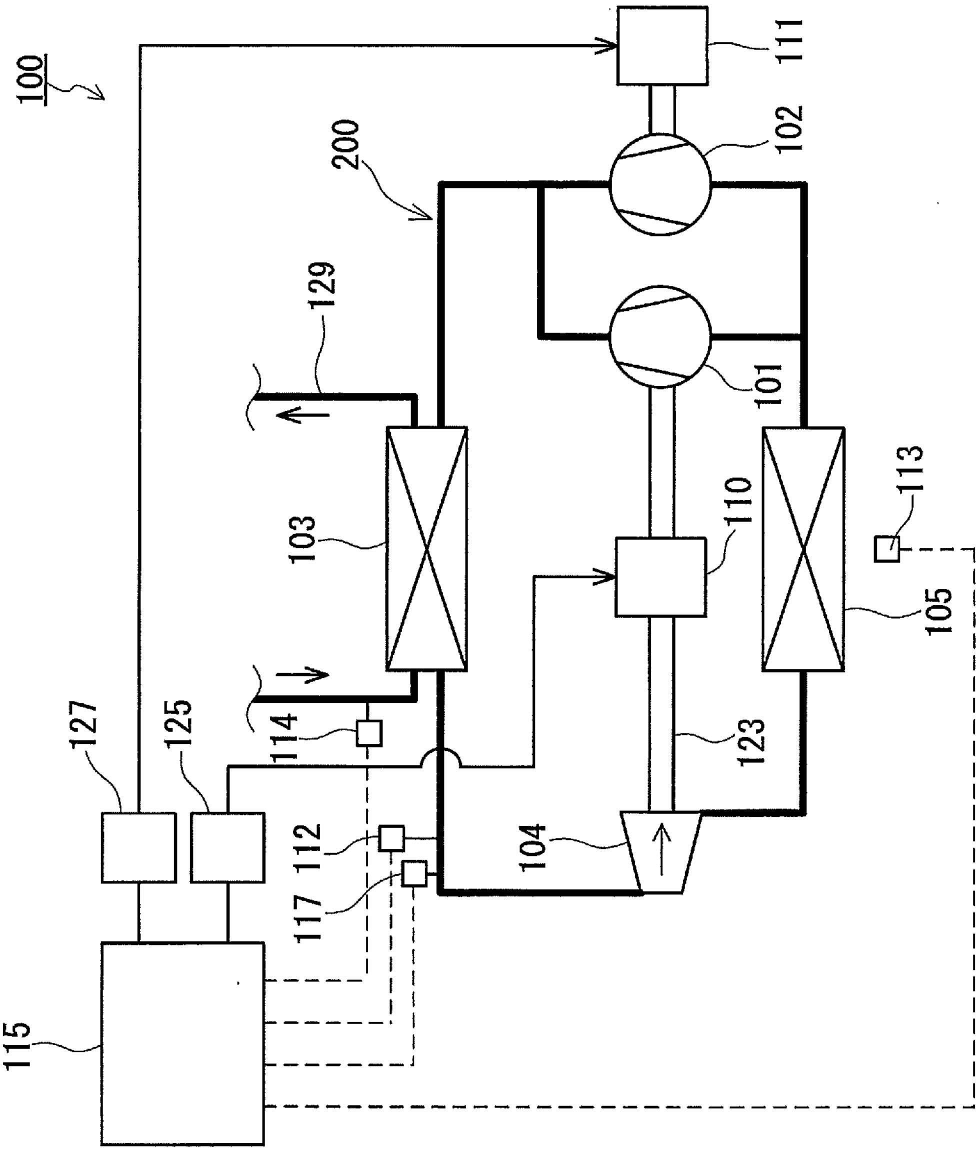
100
111
102
200
129
101
103
110
113
105
127
125
114
123
112
104
117
115

FIG.2

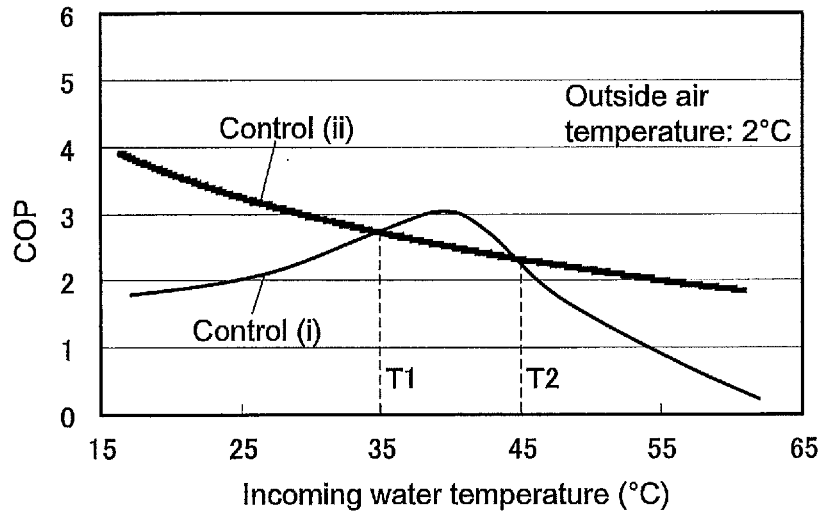
6
5
4
3
2
1
0
COP
Control (ii)
Outside air
temperature: 2°C
Control (i)
T1
T2
15
25
35
45
55
65
Incoming water temperature (°C)

FIG.3

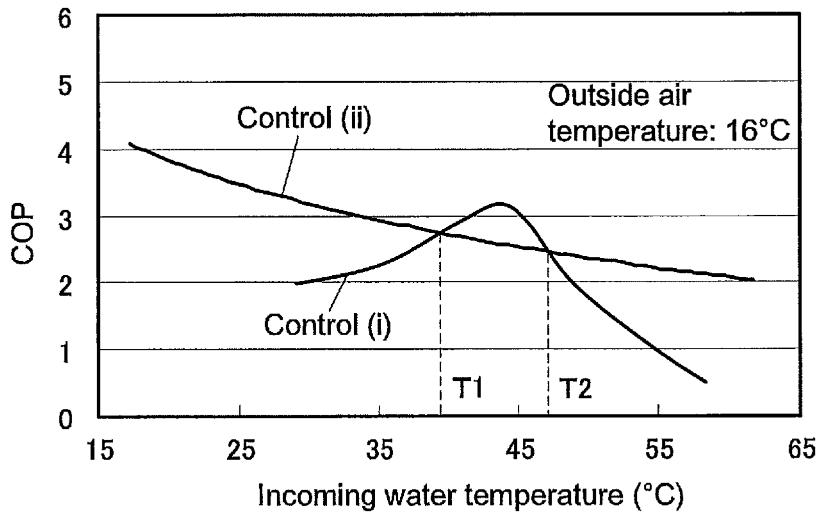
6
5
4
3
2
1
0
COP
Control (ii)
Outside air
temperature: 16°C
Control (i)
T1
T2
15
25
35
45
55
65
Incoming water temperature (°C)

FIG.4

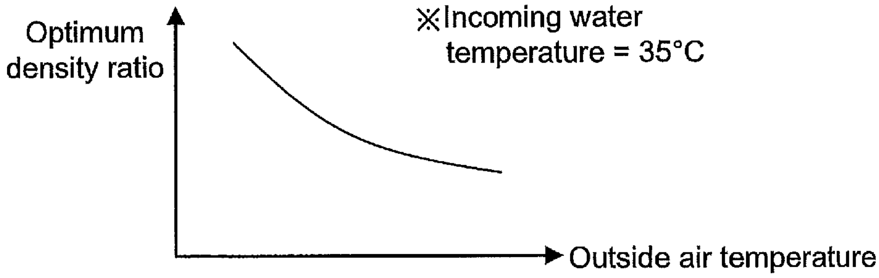


FIG.5

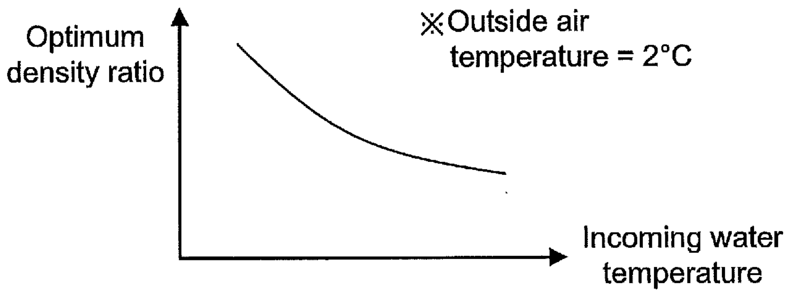


FIG.6

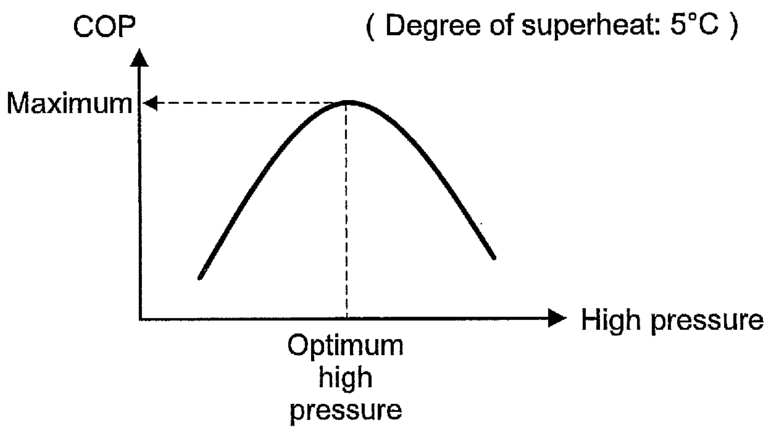

FIG.7

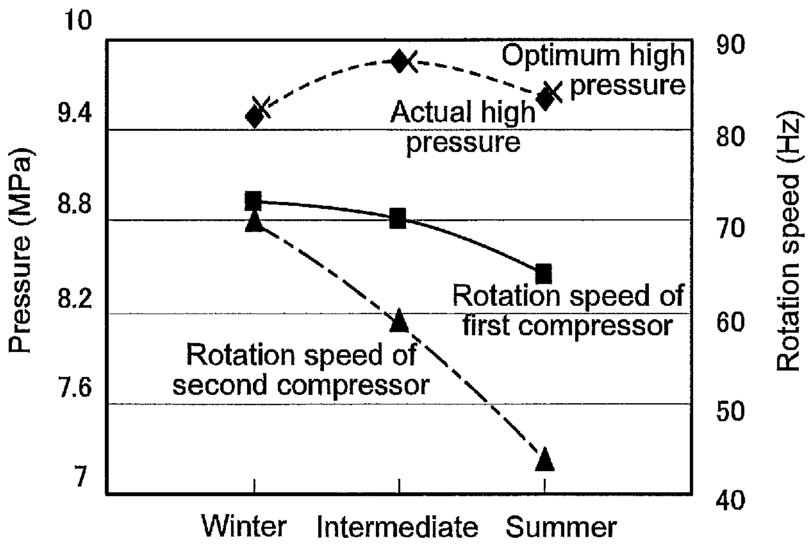
10
9.4
8.8
8.2
7.6
7
Pressure (MPa)
90
80
70
60
50
40
Rotation speed (Hz)
Optimum high pressure
Actual high pressure
Rotation speed of first compressor
Rotation speed of second compressor
Winter
Intermediate
Summer

FIG.8

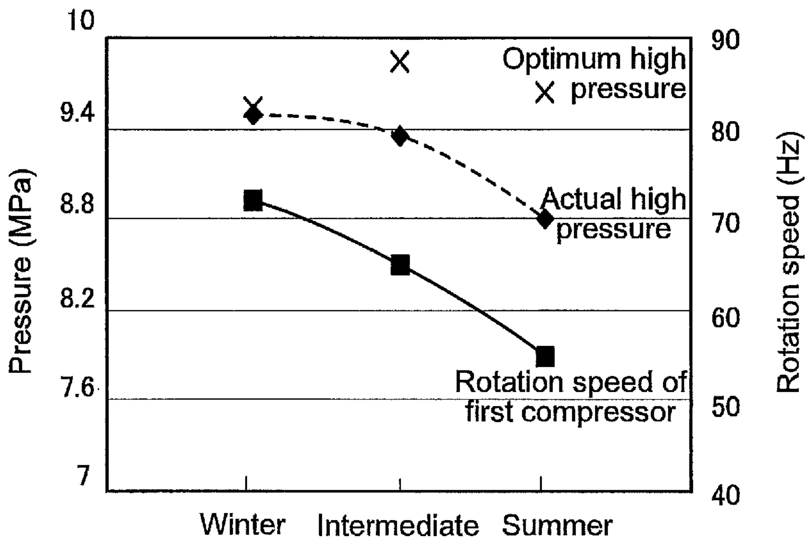
10
9.4
8.8
8.2
7.6
7
Pressure (MPa)
90
80
70
60
50
40
Rotation speed (Hz)
Optimum high pressure
Actual high pressure
Rotation speed of first compressor
Winter
Intermediate
Summer

FIG.9

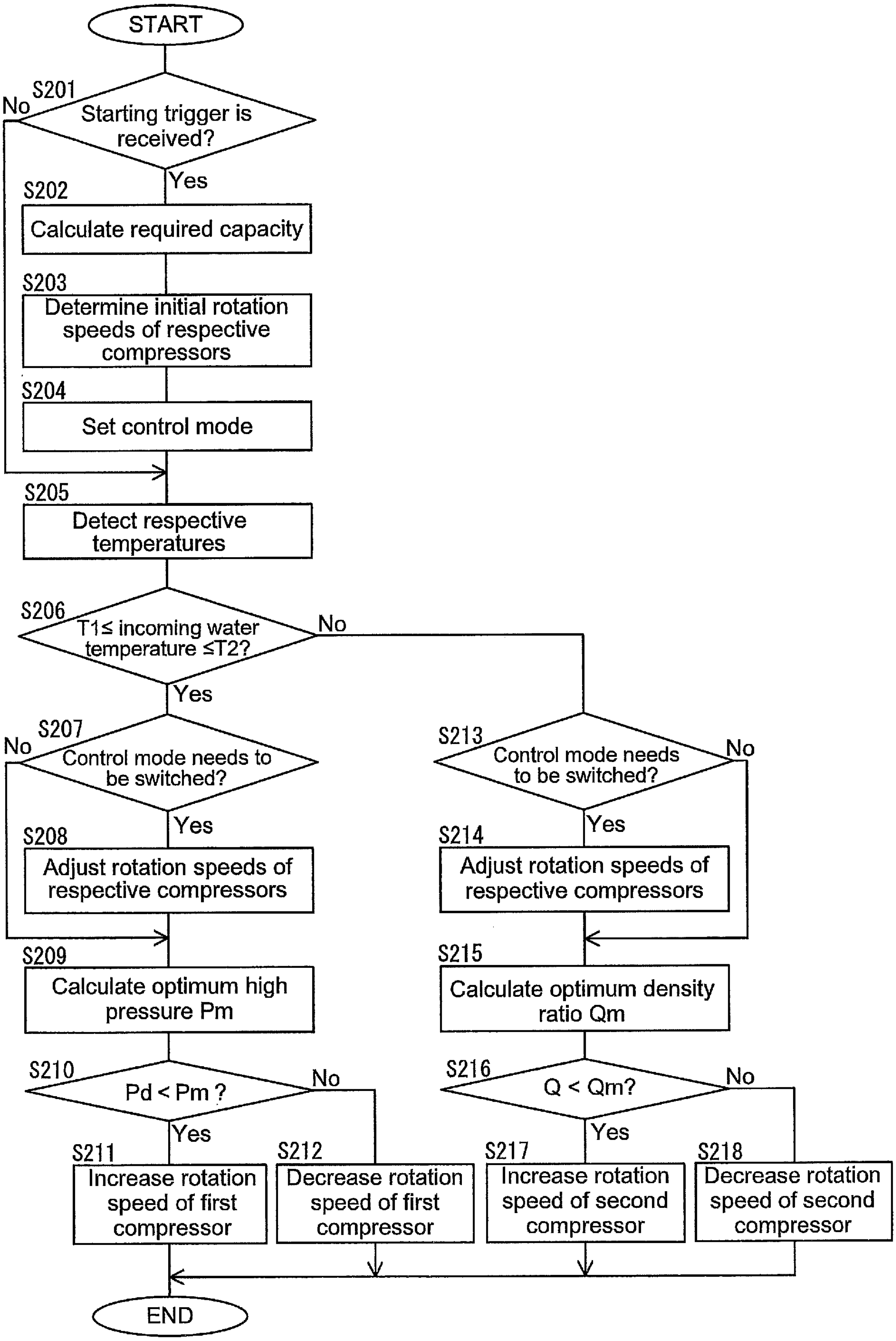
START
S201
Starting trigger is received?
No
Yes
S202
Calculate required capacity
S203
Determine initial rotation speeds of respective compressors
S204
Set control mode
S205
Detect respective temperatures
S206
T1≤ incoming water temperature ≤T2?
No
Yes
S207
Control mode needs to be switched?
No
Yes
S208
Adjust rotation speeds of respective compressors
S209
Calculate optimum high pressure Pm
S210
Pd < Pm ?
No
Yes
S211
Increase rotation speed of first compressor
S212
Decrease rotation speed of first compressor
S213
Control mode needs to be switched?
No
Yes
S214
Adjust rotation speeds of respective compressors
S215
Calculate optimum density ratio Qm
S216
Q < Qm?
No
Yes
S217
Increase rotation speed of second compressor
S218
Decrease rotation speed of second compressor
END

FIG.10A

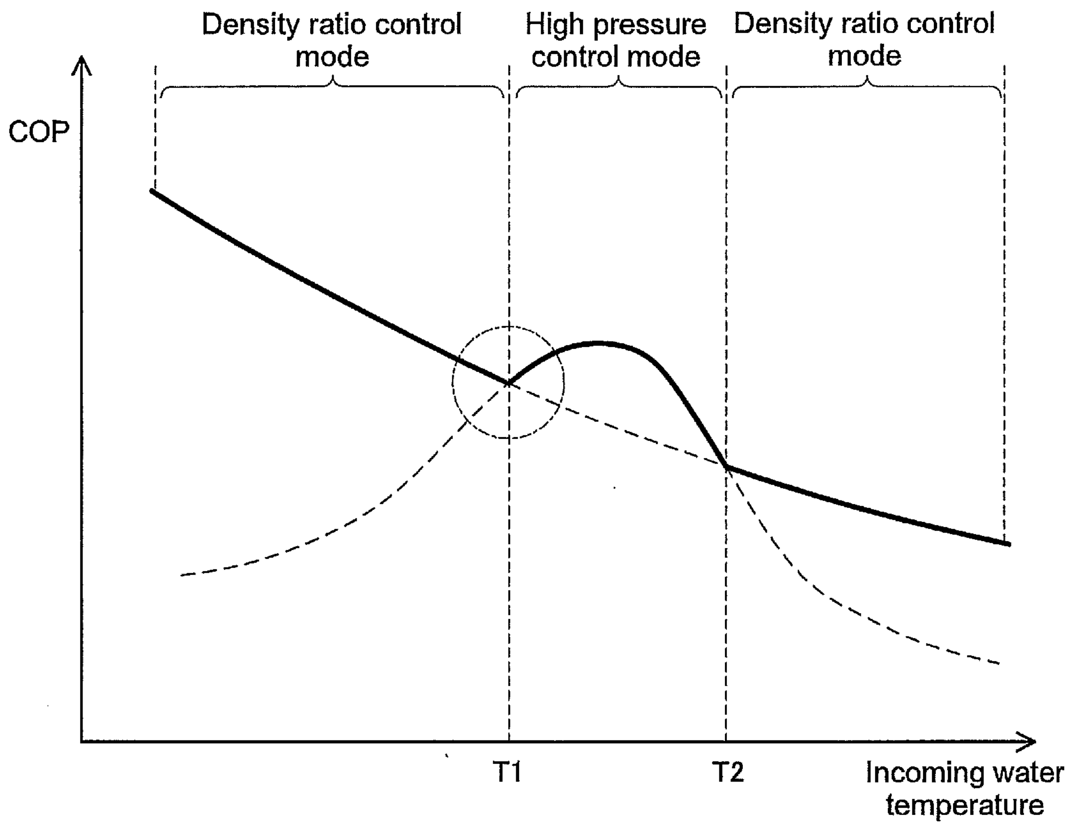


FIG.10B

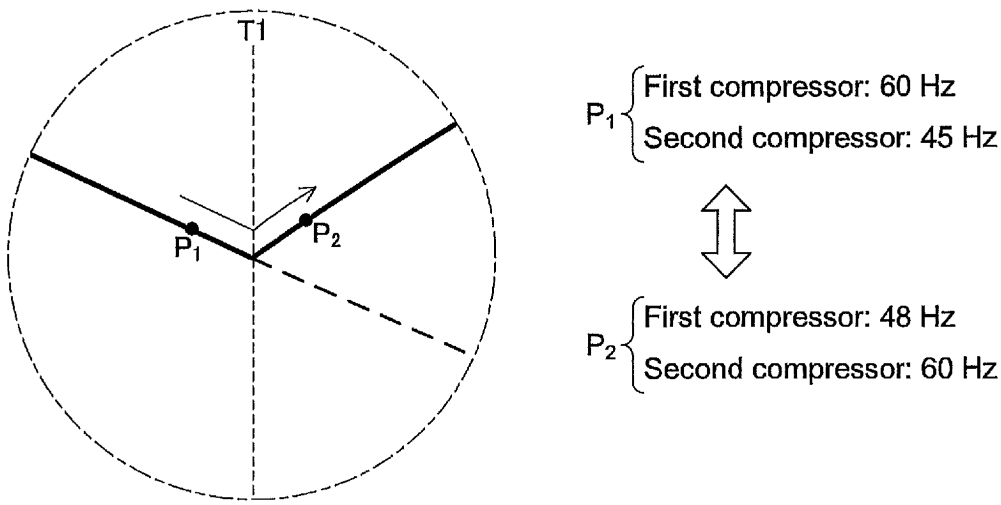

FIG.11

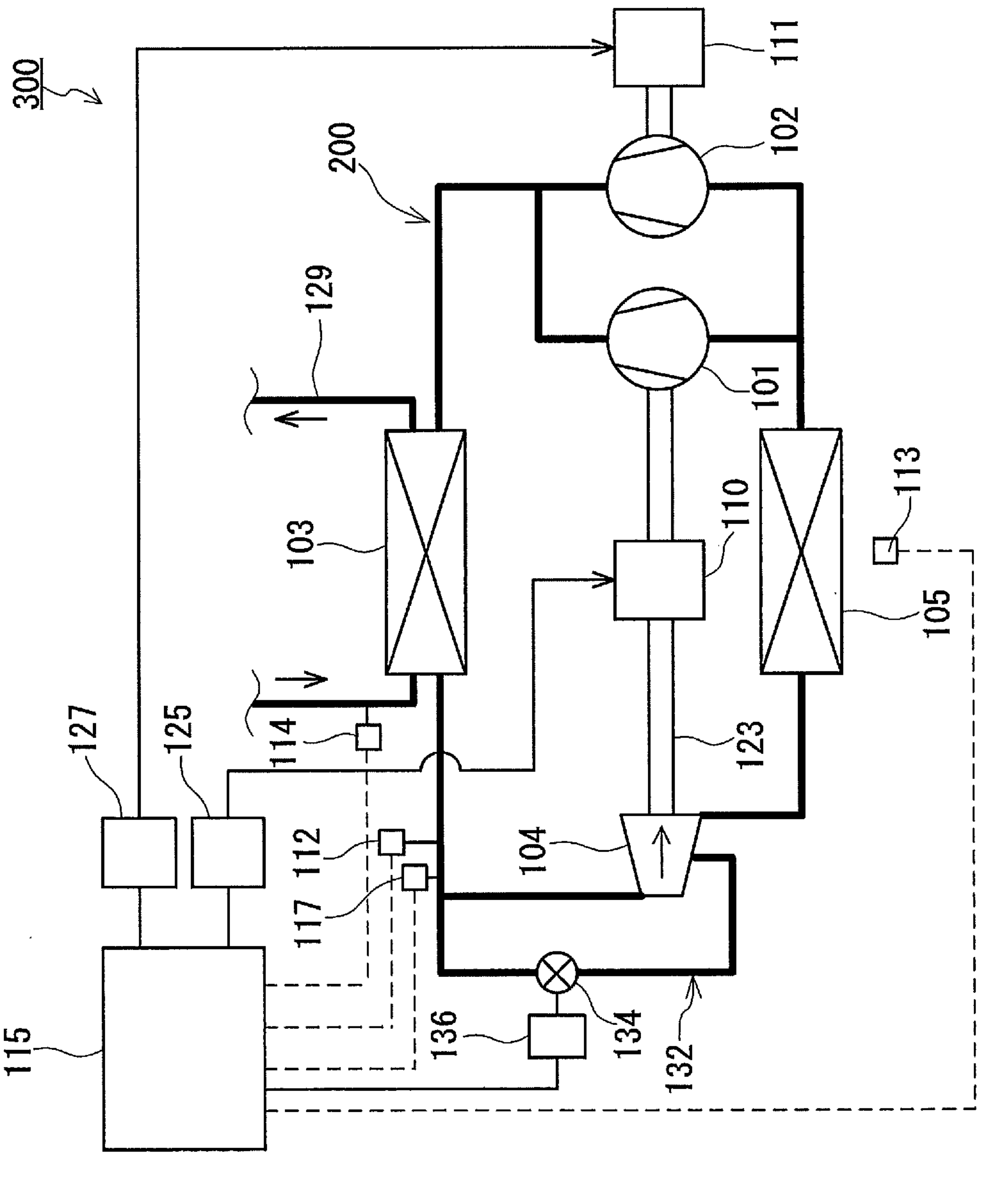
300
200
111
102
101
129
103
110
113
105
127
125
114
123
112
104
117
115
136
134
132

FIG.12

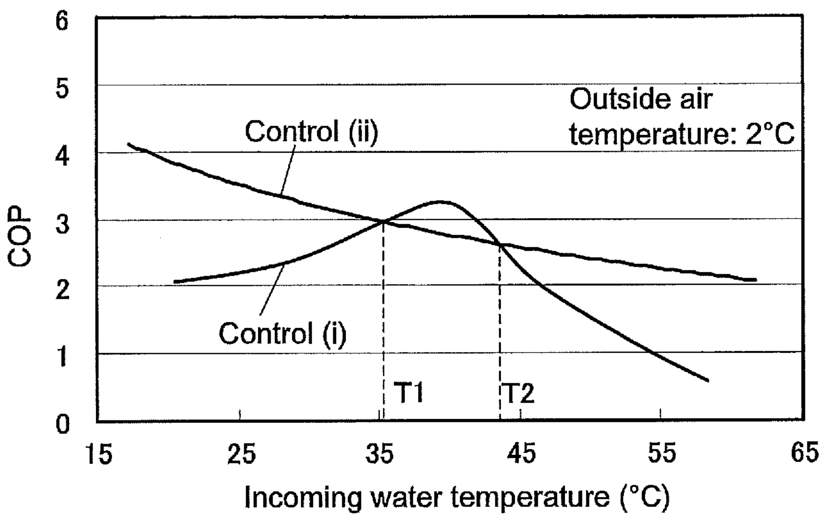
6
5
4
3
2
1
0
COP
Control (ii)
Control (i)
Outside air temperature: 2°C
T1
T2
15
25
35
45
55
65
Incoming water temperature (°C)

FIG.13

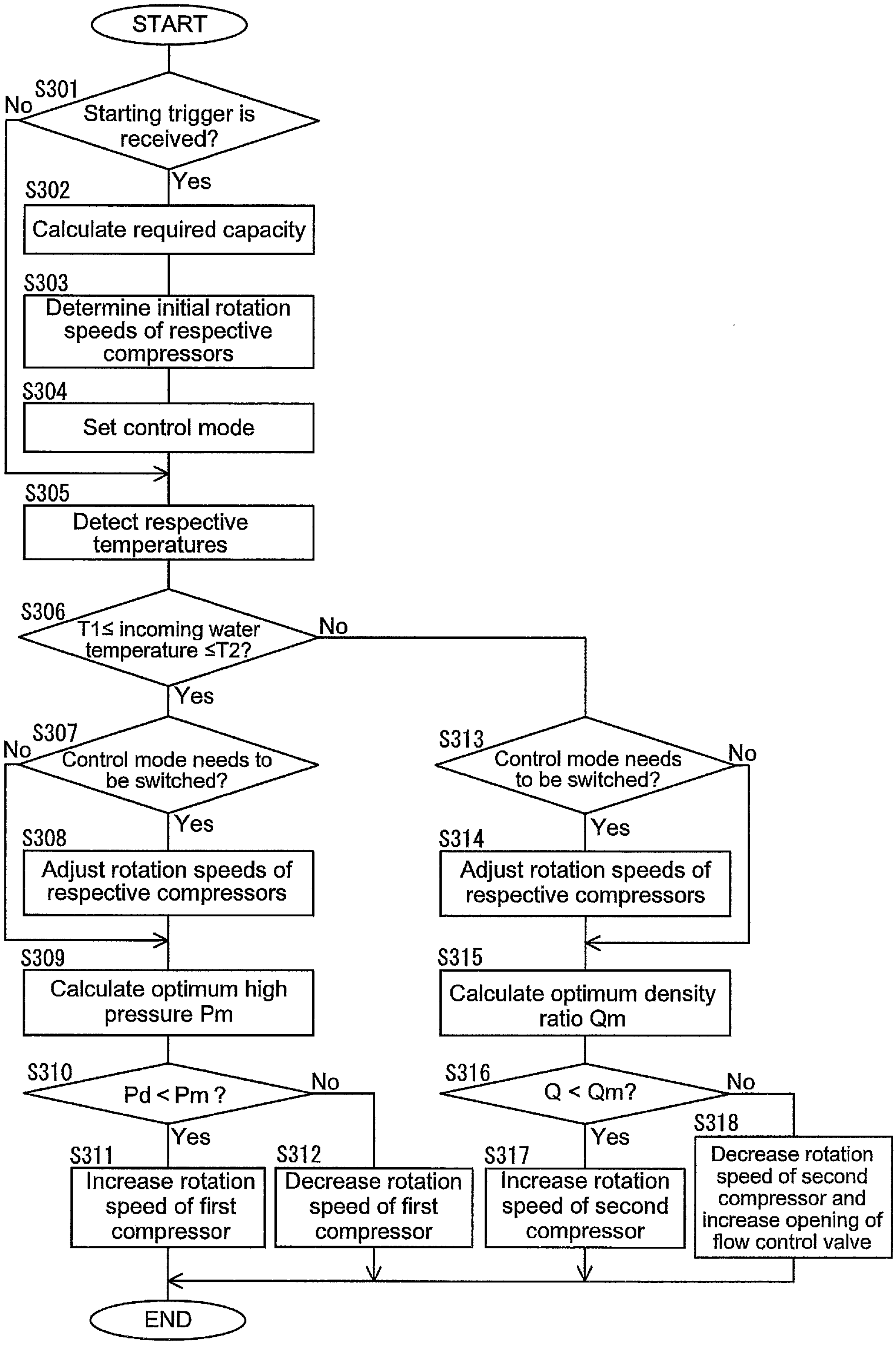
START
S301
Starting trigger is received?
No
Yes
S302
Calculate required capacity
S303
Determine initial rotation speeds of respective compressors
S304
Set control mode
S305
Detect respective temperatures
S306
T1≤ incoming water temperature ≤T2?
No
Yes
S307
Control mode needs to be switched?
No
Yes
S308
Adjust rotation speeds of respective compressors
S309
Calculate optimum high pressure Pm
S310
Pd < Pm ?
No
Yes
S311
Increase rotation speed of first compressor
S312
Decrease rotation speed of first compressor
S313
Control mode needs to be switched?
No
Yes
S314
Adjust rotation speeds of respective compressors
S315
Calculate optimum density ratio Qm
S316
Q < Qm?
No
Yes
S317
Increase rotation speed of second compressor
S318
Decrease rotation speed of second compressor and increase opening of flow control valve
END

FIG.14

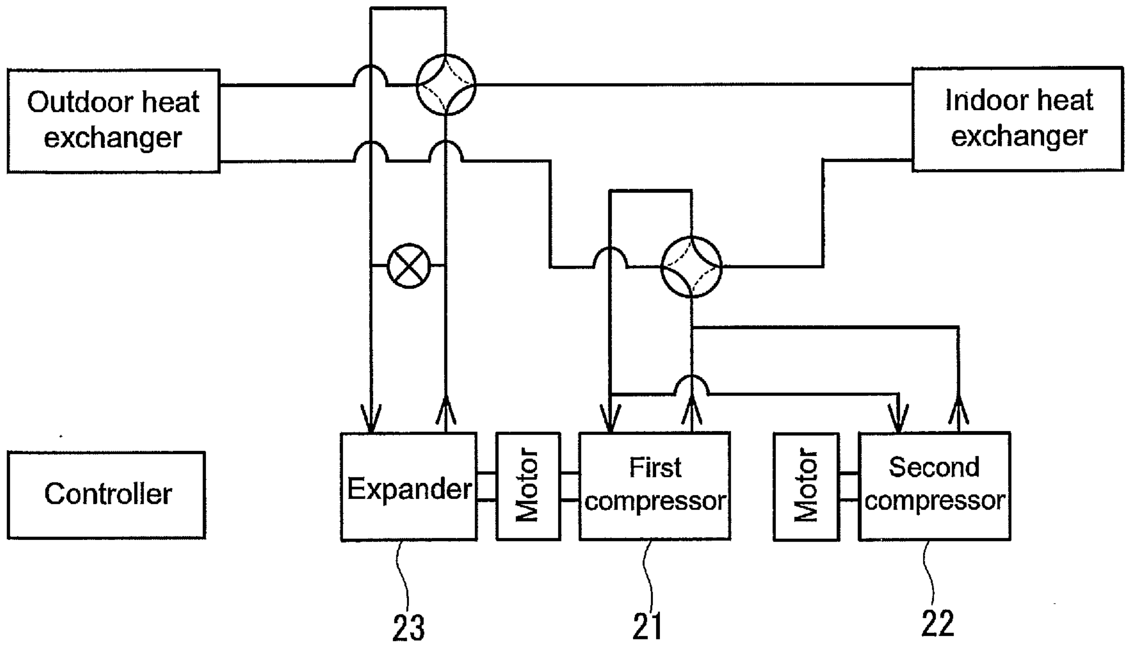
Outdoor heat exchanger
Indoor heat exchanger
Controller
Expander
Motor
First compressor
Motor
Second compressor
23
21
22

**INTERNATIONAL SEARCH REPORT**

International application No.
PCT/JP2009/000578

A. CLASSIFICATION OF SUBJECT MATTER
*F25B1/00*(2006.01)i, *F24F11/02*(2006.01)i, *F25B11/02*(2006.01)i

According to International Patent Classification (IPC) or to both national classification and IPC

B. FIELDS SEARCHED

Minimum documentation searched (classification system followed by classification symbols)
F25B1/00, F24F11/02, F25B11/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-132622 A (Daikin Industries, Ltd.), 31 May, 2007 (31.05.07), Fig. 1; Par. Nos. [0021] to [0051] (Family: none) | 1-8 |
| A | JP 2004-212006 A (Daikin Industries, Ltd.), 29 July, 2004 (29.07.04), Full text; all drawings & US 2006/0059929 A1 & EP 1586832 A1 & WO 2004/063642 A1 & DE 60320036 D & DE 60320036 T & AT 390606 T & ES 2300640 T | 1-8 |
| A | JP 4-340062 A (Nippondenso Co., Ltd.), 26 November, 1992 (26.11.92), Full text; all drawings (Family: none) | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 March, 2009 (26.03.09) | 14 April, 2009 (14.04.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No. PCT/JP2009/000578

C (Continuation). DOCUMENTS CONSIDERED TO BE RELEVANT

| Category* | Citation of document, with indication, where appropriate, of the relevant passages | Relevant to claim No. |
|---|---|---|
| A | GB 2309748 A (City University), 06 August, 1997 (06.08.97), Fig. 9 & US 5833446 A & EP 787891 A2 & WO 1997/028354 A1 & DE 69628406 D & DK 787891 T & ES 2194964 T | 1-8 |
| A | JP 2006-527836 A (Career Corp.), 07 December, 2006 (07.12.06), Figs. 4A, 4B & US 2004/0250556 A1 & EP 1649223 A & WO 2005/019743 A1 & KR 10-2006-0022275 A & CN 1836136 A | 1-8 |
| A | JP 2004-108683 A (Mitsubishi Electric Corp.), 08 April, 2004 (08.04.04), Fig. 5 (Family: none) | 1-8 |
| A | JP 2007-255889 A (Mitsubishi Electric Corp.), 04 October, 2007 (04.10.07), Fig. 12 (Family: none) | 1-8 |
| P,A | JP 2008-39237 A (Matsushita Electric Industrial Co., Ltd.), 21 February, 2008 (21.02.08), Claims 6, 7; Fig. 1 (Family: none) | 1-8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001116371 A
- JP 2004212006 A
- WO 2006035934 A